(19) Europäisches Patentamt
European Patent Office
Office européen des brevets

(11) **EP 3 617 488 A1**

(12) **EUROPEAN PATENT APPLICATION**

(43) Date of publication:
**04.03.2020 Bulletin 2020/10**

(21) Application number: **19185281.3**

(22) Date of filing: **09.07.2019**

(51) Int Cl.:
*F02D 41/14* (2006.01)
*F02D 35/02* (2006.01)
*G05B 13/04* (2006.01)
*F02P 5/153* (2006.01)
*F02D 41/28* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.08.2018 JP 2018160591**

(71) Applicant: **TOYOTA JIDOSHA KABUSHIKI KAISHA**
**Toyota-Shi,**
**Aichi-Ken 471-8571 (JP)**

(72) Inventors:
• **SATA, Kota**
**Aichi-ken, 471-8571 (JP)**
• **URANO, Shigeyuki**
**Aichi-ken, 471-8571 (JP)**
• **SHEN, Tielong**
**Tokyo, 102-8554 (JP)**
• **GAO, Jinwu**
**Tokyo, 102-8554 (JP)**

(74) Representative: **J A Kemp LLP**
**14 South Square**
**Gray's Inn**
**London WC1R 5JJ (GB)**

(54) **CONTROL DEVICE FOR INTERNAL COMBUSTION ENGINE AND CONTROL METHOD FOR INTERNAL COMBUSTION ENGINE**

(57) A control device (10) for an internal combustion engine (2) includes at least one processor (12) and a memory (14) configured to store a program. The at least one processor (12) is configured to execute, by executing the program, a process of deciding a manipulated variable of the internal combustion engine from a control input value, in accordance with a predetermined conversion rule, a process of calculating a sample value of the controlled variable, a process of calculating a reference expectation value of the controlled variable from the control input value, a process of performing a hypothesis test for a null hypothesis that an average value of a predetermined number of recent sample values of sample values of the controlled variable is equal to the reference expectation value, and a process of modifying the conversion rule by an adaptive control when the null hypothesis is rejected.

FIG. 6

**Description**

BACKGROUND OF THE INVENTION

1. Field of the Invention

The invention relates to a control device for an internal combustion engine and a control method for an internal combustion engine, and specifically, relates to a control device and a control method that are suitably used for control of a controlled object having a stochastic dispersion.

2. Description of Related Art

In the case where a feedback control is applied to a controlled variable for a controlled object having a stochastic dispersion, it is necessary to inevitably perform a conservative control, for preventing an excessive control due to the stochastic dispersion. However, in the conservative control, it is difficult to secure a fast-response to a change in the controlled variable.

The change in the controlled variable includes a change due to an original stochastic dispersion of a system and a change due to a factor other than the stochastic factor. The change in the controlled variable that needs to be dealt with by the feedback control is the latter change due to the change in the state of the controlled object. Therefore, for securing the fast-response while preventing the excessive control, it is required to determine whether the change in the controlled variable is the former change or the latter change. However, generally, a lot of data is needed for statistically determining the cause for the change in the controlled variable. As the number of data increases, the accuracy of the determination increases, but the time for collection of the data increases, so that the fast-response decreases.

For increasing the fast-response, it is necessary to perform the determination with as little data as possible. In this regard, Jinwu Gao, Yuhu Wu, Tielong Shen, A statistical combustion phase control approach of SI engines, Mechanical Systems and Signal Processing 85 (2017) 218-235 discloses a control technique of feeding back the change in the controlled variable to a manipulated variable using a hypothesis test and a statistical decision. As a specific example, Jinwu Gao, Yuhu Wu, Tielong Shen, A statistical combustion phase control approach of SI engines, Mechanical Systems and Signal Processing 85 (2017) 218-235 discloses an example in which a crank angle (represented by LPP, hereinafter) maximizing the combustion pressure of an internal combustion engine is applied to a feedback control for controlling a reference expectation value. The combustion of the internal combustion engine is an example of the controlled object having the stochastic dispersion, and LPP is an example of the controlled variable.

If the expectation value of LPP is the reference expectation value, the value (represented by Z, hereinafter) obtained by dividing a deviation of an average value of LPP from the reference expectation value by a standard error of the average value accords with a standard normal distribution. When the data of LPP from the first cycle to the n-th cycle is obtained, the average value is the average value of n pieces of data from the first cycle to the n-th cycle. Further, the standard error of the average value is obtained by dividing a standard deviation of LPP by a square of the number of data.

Whether Z accords with the standard normal distribution can be determined by comparison to a threshold value that is calculated from a significant level. In the case where Z does not fall within a credibility interval that is specified by a negative threshold value and a positive threshold value, it is determined that Z does not accord with the standard normal distribution, that is, the expectation value of LPP is not equal to the reference expectation value. In the case where Z falls within the credibility interval, Z accords with the standard normal distribution, that is, the expectation value of LPP is equal to the reference expectation value.

In the case where the expectation value of LPP is equal to the reference expectation value, the change in LPP is the change due to the original stochastic dispersion of the system. On the other hand, in the case where the expectation value of LPP is not equal to the reference expectation value, the change in LPP is the change due to the factor other than the stochastic factor. Therefore, by calculating Z for each combustion cycle and checking whether Z falls within the credibility interval, it is possible to determine whether the change is a change in LPP that needs to be dealt with by the feedback control, for each combustion cycle.

In the specific feedback control disclosed in Jinwu Gao, Yuhu Wu, Tielong Shen, A statistical combustion phase control approach of SI engines, Mechanical Systems and Signal Processing 85 (2017) 218-235, a value obtained by adding a product of the positive threshold value and the standard error to the reference expectation value of LPP is set as an upper limit value of LPP, and in the case where the average value of LPP exceeds the upper limit value, ignition timing is advanced. Further, a value obtained by adding a product of the negative threshold value and the standard error to the reference expectation value of LPP is set as a lower limit value of LPP, and in the case where the average value of LPP exceeds the lower limit value, the ignition timing is advanced. In the control technique disclosed in Jinwu Gao, Yuhu Wu, Tielong Shen, A statistical combustion phase control approach of SI engines, Mechanical Systems and Signal Processing 85 (2017) 218-235, it is possible to make a statistical determination without requiring a lot of data. Therefore, by performing the feedback control based on the determination, it is possible to secure the fast-response to the change in the controlled variable due to the factor other than the stochastic factor, while preventing the excessive control to the change in the controlled variable due to the stochastic dispersion.

Japanese Patent Application Publication No. 2007-198313, Japanese Patent Application Publication No. 2002-322938 and Japanese Patent Application Publication No. 2011-089470 are exemplary literatures that show the state of the art in the technical field related to the invention.

SUMMARY OF THE INVENTION

However, in the control technique disclosed in Jinwu Gao, Yuhu Wu, Tielong Shen, A statistical combustion phase control approach of SI engines, Mechanical Systems and Signal Processing 85 (2017) 218-235, there is room for further improvement in terms of the fast-response to the change in the controlled variable due to the factor other than stochastic factor.

Hence, the invention further enhances the prevention of the excessive control to the change in the controlled variable due to the stochastic dispersion and the securement of the fast-response to the change in the controlled variable due to the factor other than the stochastic factor, by a control technique evolved from the control technique disclosed in Jinwu Gao, Yuhu Wu, Tielong Shen, A statistical combustion phase control approach of SI engines, Mechanical Systems and Signal Processing 85 (2017) 218-235.

A first aspect of the invention is a control device for an internal combustion engine. The control device includes: at least one processor; and a memory configured to store a program. The at least one processor is configured to execute a manipulated variable decision process, a sample value calculation process, an expectation value calculation process, a hypothesis test process and an adaptive control process by executing the program. The manipulated variable decision process decides a manipulated variable of the internal combustion engine from a control input value related to a controlled variable including a stochastic dispersion, in accordance with a predetermined conversion rule. The sample value calculation process calculates a sample value of the controlled variable for each sampling cycle based on information from a sensor that detects a state of the internal combustion engine. The expectation value calculation process calculates a reference expectation value of the controlled variable from the control input value using a normative model for the internal combustion engine. The hypothesis test process performs a hypothesis test for a null hypothesis that an average value of a predetermined number of recent sample values of sample values of the controlled variable is equal to the reference expectation value. The adaptive control process modifies the predetermined conversion rule by an adaptive control based on an error between the average value and the reference expectation value, when the null hypothesis is rejected.

With the above configuration, by combining the adaptive control with the determination of the stochastic dispersion by the hypothesis test, it is possible to expect a further enhancement of the prevention of the excessive control to the change in the controlled variable due to the stochastic dispersion and the securement of the fast-response to the change in the controlled variable due to the factor other than the stochastic factor.

In the control device, the hypothesis test process may include an acceptance region calculation process and a determination process. The acceptance region calculation process may calculate an upper limit value of a region of acceptance and a lower limit value of the region of the acceptance by multiplication of a standard error of a reference normal population of the controlled variable when a number of sample data is the predetermined number by a predetermined critical value. The determination process may reject the null hypothesis when the error between the average value and the reference expectation value does not fall within the region of the acceptance. The expectation value calculation process may be a process of calculating an average value of the reference normal population, as the reference expectation value.

In the control device, the reference normal population may be a set of sample values prior to the predetermined number of sample values of the controlled variable, and the reference expectation value and the standard error may be updated for each sampling cycle. In the control device, the reference normal population may be a set of sample values of the controlled variable, the sample values being obtained from a reference internal combustion engine, and the reference expectation value and the standard error may be predetermined values that are calculated from the reference normal population.

In the control device, the manipulated variable decision process may include a feedback process of calculating a feedback value of the manipulated variable from the error between the average value and the reference expectation value, and the adaptive control process may include a feedback gain modification process of modifying a feedback gain in the feedback process, depending on the error between the average value and the reference expectation value.

In the control device, the manipulated variable decision process may include a feedforward process of calculating a feedforward value of the manipulated variable from the control input value, and the adaptive control process may include a feedforward map modification process of modifying a feedforward map in the feedforward process, depending on the error between the average value and the reference expectation value.

A second aspect of the invention is a control method for an internal combustion engine. The internal combustion engine includes a memory configured to store a program, and at least one processor configured to execute the program. The control method includes: executing, by the at least one processor, a manipulated variable decision process of deciding a manipulated variable of the internal combustion engine from a control input value related to a controlled variable including a stochastic dispersion, in accordance with a predetermined conversion rule; executing, by the at least one processor, a sample value calculation process of calculating a sample value of the controlled variable for each sampling cycle based on information from a sensor that detects a state of the internal combustion engine; executing, by the at least one processor, an expectation value calculation process of calculating a reference expectation value of the controlled variable from the control input value using a normative model for the internal combustion engine; executing, by the at least one processor, a hypothesis test process of performing a hypothesis test for a null hypothesis that an average value of a predetermined number of recent sample values of sample values of the controlled variable is equal to the reference expectation value; and executing, by the at least one processor, an adaptive control process of modifying the predetermined conversion rule by an adaptive control based on an error between the average value and the reference expectation value, when the null hypothesis is rejected.

With the above configuration, by combining the adaptive control with the determination of the stochastic dispersion by the hypothesis test, it is possible to expect a further enhancement of the prevention of the excessive control to the change in the controlled variable due to the stochastic dispersion and the securement of the fast-response to the change in the controlled variable due to the factor other than the stochastic factor.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a block diagram showing a hardware configuration of a control system for an internal combustion engine according to an embodiment of the invention;
FIG. 2 is a block diagram showing processes that are executed by a control device for the internal combustion engine according to the embodiment of the invention;
FIG. 3 is a diagram for describing sampling data that is used in a hypothesis test process;
FIG. 4 is a diagram for describing the hypothesis test process;
FIG. 5 is a flowchart showing a flow from the hypothesis test process to the adaptive control process;
FIG. 6 is a block diagram showing a software configuration of the control system for the internal combustion engine according to the embodiment of the invention;
FIG. 7 is a block diagram showing a detailed software configuration of a controller that constitutes the control system for the internal combustion engine according to the embodiment of the invention;
FIG. 8 is a diagram for describing setting of ignition timing;
FIG. 9 is a diagram for describing an example in which an ignition timing control of an adaptive control according to the embodiment of the invention is applied to a feedforward control; and
FIG. 10 is a diagram for describing an example in which the ignition timing control of the adaptive control according to the embodiment of the invention is applied to a feedback control.

DETAILED DESCRIPTION OF EMBODIMENTS

Hereinafter, an embodiment of the invention will be described with reference to the drawings. However, when a numerical value about each element, as exemplified by the number of elements, quantity, amount and range, is mentioned in the embodiment described below, the invention is not limited to the mentioned numerical value, except in a case where the numerical value is explicitly adopted particularly and a case where the numerical value is clearly adopted in principle. Further, structures, steps and the like in the embodiment described below are not always essential for the invention, except in a case where the structures, the steps and the like are explicitly adopted particularly and a case where the structures, the steps and the like are clearly adopted in principle.

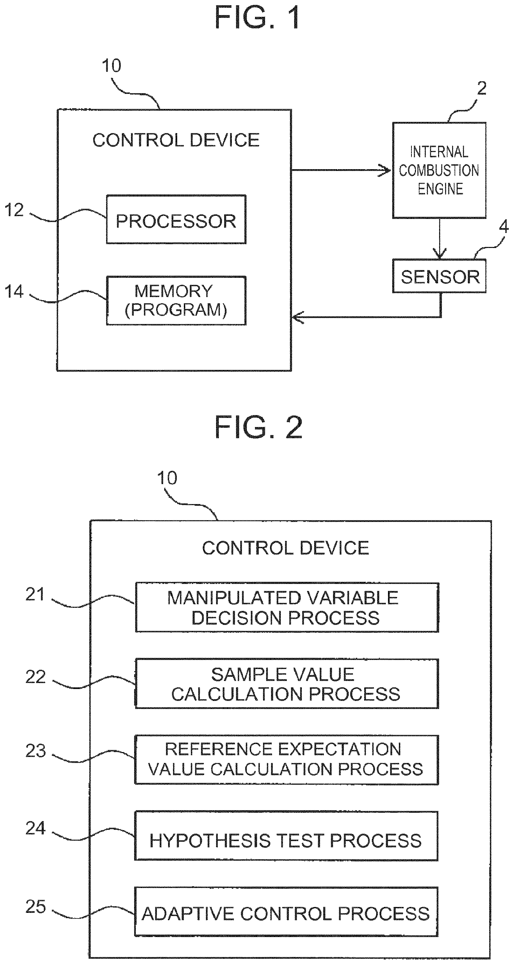

FIG. 1 is a block diagram showing a hardware configuration of a control system for an internal combustion engine according to the embodiment of the invention. The control system includes at least an internal combustion engine 2, a plurality of sensors 4 that detects the state of the internal combustion engine 2, and a control device (electronic control unit) 10 that controls the internal combustion engine 2.

The internal combustion engine 2 is an internal combustion engine that is mounted on an automobile, for example, a spark-ignited internal combustion engine that uses gasoline as fuel. The internal combustion engine 2 includes an ignition system that can adjust ignition timing by controlling energization period for an ignition coil. The plurality of sensors 4 includes at least a combustion pressure sensor and a crank angle sensor. The combustion pressure sensor, which is attached to each cylinder of the internal combustion engine 2, outputs a signal corresponding to the combustion pressure in a combustion chamber. The crank angle sensor outputs a signal corresponding to the crank angle of the internal combustion engine 2. In addition, the plurality of sensors 4 may include a knocking sensor, an air-fuel ratio sensor, or the like.

The control device 10, which is an electronic control unit for engine control, receives the signals of the sensors 4, and calculates a controlled variable of the internal combustion engine 2, based on information included in the signals of the sensors 4. The control device 10 includes a processor 12 and a memory 14 as physical constituents. The memory 14 stores a program for control of the internal combustion engine 2, and the processor 12 reads the program from the memory 14 and executes the program. The control device 10 may be constituted by a plurality of electronic control units.

FIG. 2 is a block diagram showing some processes that are executed by the control device 10. FIG. 2 expresses, as blocks, processes that are of various processes to be executed by the control device 10 and that are particularly related to decision of a manipulated variable of the internal combustion engine 2. As shown in FIG. 2, the processes by the control device 10 includes a manipulated variable decision process 21, a sample value calculation process 22, a reference expectation value calculation process 23, a hypothesis test process 24, and an adaptive control process 25.

First, the manipulated variable decision process 21 will be described. In the manipulated variable decision process 21, the control device 10 decides the manipulated variable for controlling a controlled object of the internal combustion engine 2. The controlled object of the internal combustion engine 2 includes a controlled object including a stochastic dispersion, as exemplified by combustion and exhaust emission. In the case where the controlled object includes the stochastic dispersion, the controlled variable, which is a state quantity, also includes the stochastic dispersion. Examples of the controlled variable relevant to the combustion include CA50, maximum-combustion-pressure crank angle (LPP), knocking-start crank angle, maximum-knocking-occurrence crank angle, and knocking intensity. Examples of the controlled variable relevant to the exhaust emission include air-fuel ratio and fuel equivalence ratio. In the case where the controlled object is the combustion, the manipulated variable is ignition timing, for example. In the case where the controlled object is the exhaust emission, the manipulated variable is fuel injection quantity, for example.

In the manipulated variable decision process 21, the manipulated variable of the internal combustion engine 2 is decided from a control input value in accordance with a predetermined conversion rule. The control input value is associated with a reference expectation value (target value) of the controlled variable. In the controlled technique disclosed in Jinwu Gao, Yuhu Wu, Tielong Shen, A statistical combustion phase control approach of SI engines, Mechanical Systems and Signal Processing 85 (2017) 218-235, the control input value needs to have the same dimension as the dimension of the controlled variable, and the reference expectation value itself of the controlled variable is input as the control input value. On the other hand, in the control device 10 according to the embodiment, a parameter having a different dimension from the dimension of the control input value can be used as the control input value, as described later. In the case where the controlled variable is CA50, for example, required torque or required efficiency can be used as the control input value. In the case where the controlled variable is air-fuel ratio, for example, required NOx concentration or required fuel efficiency can be used as the control input value. Here, the reference expectation value itself of the controlled variable can be input as the control input value.

The conversion rule for deciding the manipulated variable from the control input value, specifically, is configured by a map and/or a function. For example, in the case where a feedback control is used for deciding the manipulated variable from the control input value, the conversion rule includes a conversion function for a feedback process. A feedback gain of the conversion function can be varied, and can be modified by the adaptive control process 25 described later. For example, in the case where a feedforward control is used for deciding the manipulated variable from the control input value, the conversion rule includes a feedforward map for a feedforward process. In the feedforward map, the manipulated variable is associated with the control input value. The association between the control input value and the manipulated variable in the map can be modified, and is modified by the adaptive control process 25 described later.

Next, the sample value calculation process 22 will be described. In the sample value calculation process 22, the control device 10 calculates a sample value of the controlled variable for each sampling cycle based on the information from the sensors 4. The calculated sample value of the controlled variable is fed back to the manipulated variable decision process. Therefore, preferably, the sampling cycle should be equal to the cycle of the decision of the manipulated variable. For example, the combustion cycle of the internal combustion engine 2 may be used as the sampling cycle.

For example, in the case where the controlled variable is CA50, the control device 10, for each combustion cycle, calculates the value of CA50 from the pressure in the combustion chamber that is measured by the combustion pressure sensor. Specifically, CA50 means a crank angle at which combustion rate is 50%. The combustion rate means the rate of the mass of actually combusted fuel to the mass of fuel supplied into the combustion chamber per combustion cycle. The combustion rate at an arbitrary crank angle can be calculated as the rate of the heat production at the crank angle to the final heat production. The heat production is the total of heat quantity generated in the combustion chamber from the start of the combustion in one combustion cycle. Therefore, the heat production at the crank angle is calculated by integrating a heat production rate calculated for each crank angle in an integration range from a combustion start angle to the crank angle. The heat production rate is a heat quantity produced in the combustion chamber per unit crank angle, and can be calculated from the pressure in the combustion chamber that is measured by the combustion pressure sensor. In the case where the controlled variable is CA50, the value of CA50 is calculated for each combustion cycle in this way. The combustion rate of 50% is one criterion, and a crank angle at which the combustion rate is a predetermined rate other than 50% may be used as the controlled variable.

Next, the reference expectation value calculation process 23 will be described. In the reference expectation value calculation process 23, the control device 10 calculates the reference expectation value of the controlled variable from the control input value, using a normative model for the internal combustion engine 2. The normative model is a model that simulates an ideal input-output characteristic between the control input value as an input and the controlled variable as an output so as to satisfy a required performance of the internal combustion engine 2. In the normative model, dimension conversion is performed, and therefore, the dimension of the control input value may be different from the dimension of the controlled variable as described above.

For example, the normative model is configured by a function, and a parameter of the function is learned based on actual data of the control input value and the controlled variable. For example, the data to be used for the learning by the normative model may be data to be obtained from a reference internal combustion engine. The reference internal combustion engine is an internal combustion engine having a desired performance according to the design. In the case where the normative model performs the learning with such data, a deviation between the reference expectation value obtained from the normative model and the sample value calculated in the sample value calculation process 22 means that there is a gap between the current state and proper state of the internal combustion engine 2.

Further, for example, the data to be used for the learning by the normative model may be data to be obtained by an actual operation of the internal combustion engine 2. The data to be used for the learning is updated for each sampling cycle. In the case where the normative model performs the learning with such data, a deviation between the reference expectation value obtained from the normative model and the sample value calculated in the sample value calculation process 22 means that there is a gap between the current state and past state of the internal combustion engine 2. That is, the deviation means a change in the state of the internal combustion engine 2 (particularly, the state of the controlled object).

Next, the hypothesis test process 24 will be described. The internal combustion engine 2 has an individual difference, and changes over time. Therefore, even when the manipulated variable is identical, the obtained sample value of the controlled variable has a dispersion for each sampling cycle. However, the dispersion includes a stochastic dispersion in accordance with a normal distribution. Hence, in the hypothesis test process 24, the control device 10 performs a hypothesis test for a null hypothesis that an average value (referred to as an average recent sample value, hereinafter) of a predetermined number of recent sample values of the sample values of the controlled variable is equal to the reference expectation value calculated in the reference expectation value calculation process.

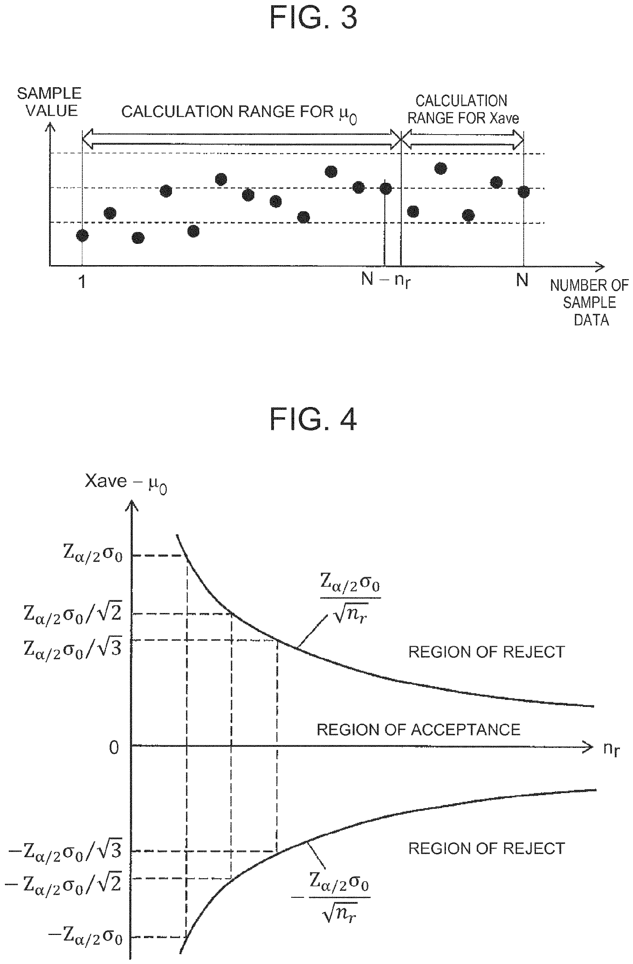

Here, as shown in FIG. 3, suppose that sample values of the controlled variable from the first cycle to the N-th cycle have been acquired. Among them, an average value of sample values of the controlled variable in $n_r$ recent cycles is calculated as the average recent sample value. Here, the average recent sample value is represented by $X_{ave}$. Further, a set of the controlled variable from the first cycle to the $N-n_r$-th cycle is used as a reference normal population, and an average value of the reference normal population is calculated as a reference expectation value. Here, the reference expectation value of the controlled variable is represented by $\mu_o$. As described above, the reference expectation value $\mu_o$ is calculated in the reference expectation calculation process 23. In the reference expectation value calculation process 23, a set of sample values of the controlled variable to be obtained from the reference internal combustion engine may be used as the reference normal population, and an average value of the reference normal population may be calculated as the reference expectation value. In that case, the reference normal population may be created for each operation condition that is defined by engine speed and engine load, for example.

In the case of making the null hypothesis that the average recent sample value $X_{ave}$ is equal to the reference expectation value $\mu_o$, data Z calculated by the following formula accords with a standard normal distribution if the null hypothesis is true. In the following formula, $\sigma_o$ is a standard deviation of the reference normal population, and $\sigma_o / n_r^{1/2}$ is a standard error of the reference normal population when the number of data is $n_r$.

$$Z = \frac{|X_{ave} - \mu_o|}{\sigma_o / \sqrt{n_r}} \sim N(0,1)$$

When a significance level is represented by $\alpha$ and a critical value for the data Z is represented by $Z_{\alpha/2}$, the critical value $Z_{\alpha/2}$ can be calculated by the following formula. The significance level $\alpha$ is a numerical value that is decided by adaptation at the time of design.

$$1 - \alpha = \int_{-Z_{\alpha/2}}^{Z_{\alpha/2}} \frac{1}{2\pi} exp\left(-\frac{Z^2}{2}\right) dZ$$

When the dispersion of the controlled variable for each sampling cycle in the internal combustion engine 2 is a stochastic dispersion in accordance with a normal distribution, the following formula is satisfied for the error between the average recent sample value $X_{ave}$ and the reference expectation value $\mu_o$. The lower limit value of the error $X_{ave} - \mu_o$ of the controlled variable is a value obtained by multiplying the standard error $\sigma_o / n_r^{1/2}$ by a negative critical value Za/2, and the upper limit value of the error $X_{ave} - \mu_o$ of the controlled variable is a value obtained by multiplying the standard error $\sigma_o / n_r^{1/2}$ by a positive critical value $Z_{\alpha/2}$. When the following formula is not satisfied, the dispersion of the sample value of the controlled variable includes a factor other than the stochastic factor.

$$-\frac{Z_{\alpha/2}\sigma_o}{\sqrt{n_r}} \leq X_{ave} - \mu_o \leq \frac{Z_{\alpha/2}\sigma_o}{\sqrt{n_r}}$$

FIG. 4 is a diagram expressing the above formula as a graph. In the graph, a curve drawn in a positive error region is a curve showing a line of the upper limit value $Z_{\alpha/2} \times \sigma_o / n_r^{1/2}$ of the upper formula, and a curve drawn in a negative error region is a curve showing a line of the lower limit value $-Z_{\alpha/2} \times \sigma_o / n_r^{1/2}$ of the upper formula. An error range exceeding the lower limit value and an error range exceeding the upper limit value are referred to as a region of reject. Further, an error range from the lower limit value to the upper limit value is referred to as a region of acceptance. When the error $X_{ave} - \mu_o$ of the controlled variable does not fall within the region of the acceptance, the null hypothesis that the average recent sample value $X_{ave}$ is equal to the reference expectation value $\mu_o$ is rejected.

As seen from the graph in FIG. 4, by central limit theorem, the region of the acceptance narrows as the number $n_r$ of the sample data of the average recent sample value $X_{ave}$ increases. That is, a large error is permitted when the number $n_r$ of the sample data is small, but the error to be permitted is reduced as the number $n_r$ of the sample data increases. The number $n_r$ of the sample data may be a fixed value, or may be a variable value that is changed, for example, depending on the operation condition of the internal combustion engine 2.

Finally, the adaptive control process 25 will be described. In the case where the null hypothesis that the average recent sample value $X_{ave}$ is equal to the reference expectation value $\mu_o$ is rejected in the hypothesis test process 24, the dispersion of the sample value of the controlled variable includes a factor other than the stochastic factor. The main factor is a change in the state of the controlled object due to a change in an environment condition, a temporal change in the internal combustion engine 2, that is, a deviation between the actual state of the controlled object and the state of the controlled object in the normative model. Hence, in the case where the above-described null hypothesis is rejected in the hypothesis test process 24, the control device 10, in the adaptive control process 25, modifies the conversion rule to be used for the decision of the manipulated variable in the manipulated variable decision process 21, by an adaptive control based on the error $X_{ave} - \mu_o$ of the controlled variable.

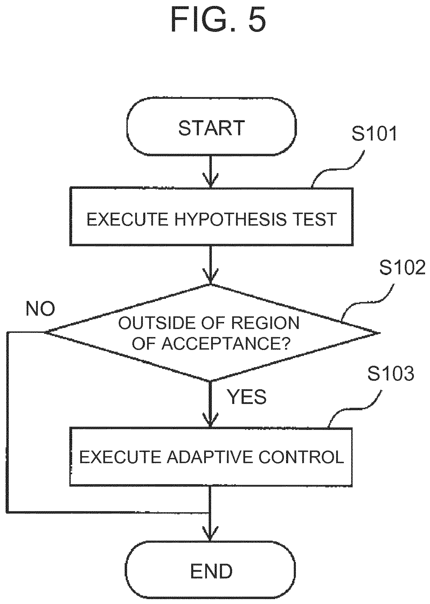

FIG. 5 is a flowchart showing a flow from the hypothesis test process 24 to the adaptive control process 25. The hypothesis test process 24 is executed for each sampling cycle (step S101). Then, it is determined whether the error $X_{ave} - \mu_o$ of the controlled variable is outside the region of the acceptance or inside the region of the acceptance (step S102). In the case where the error $X_{ave} - \mu_o$ of the controlled variable is outside the region of the acceptance as a result of the determination, the adaptive control process 25 is executed (step S103). On the other hand, in the case where the error $X_{ave} - \mu_o$ of the controlled variable is inside the region of the acceptance, the adaptive control process 25 is not executed, and the conversion rule to be used for the decision of the manipulated variable in the manipulated variable decision process 21 is not modified.

In the adaptive control process 25, the conversion rule is modified based on the magnitude of the error $X_{ave} - \mu_o$ of the controlled variable and whether the sign is positive or negative, such that the error $X_{ave} - \mu_o$ of the controlled variable falls within the region of the acceptance. A specific modified object is a map or function that configures the conversion rule. For example, in the case where the conversion rule is configured by a function, gains of at least some members are modified depending on the magnitude of the error $X_{ave} - \mu_o$ of the controlled variable. In the case where the feedback control is used for the decision of the manipulated variable, a conversion function for the feedback process is included in the conversion rule, and at least some feedback gains are adopted as the modified object in the adaptive control.

In the case where the conversion rule is configured by a map, some or all map values are modified, for example, depending on the magnitude of the error $X_{ave} - \mu_o$ of the controlled variable and/or whether the sign is positive or negative. Thereby, the association between the control input value and the manipulated variable in the map is modified. In the case where the feedforward control is used for the decision of the manipulated variable, a feedforward map for the feedforward process is included in the conversion rule, and at least some map values are adopted as the modified object in the adaptive control.

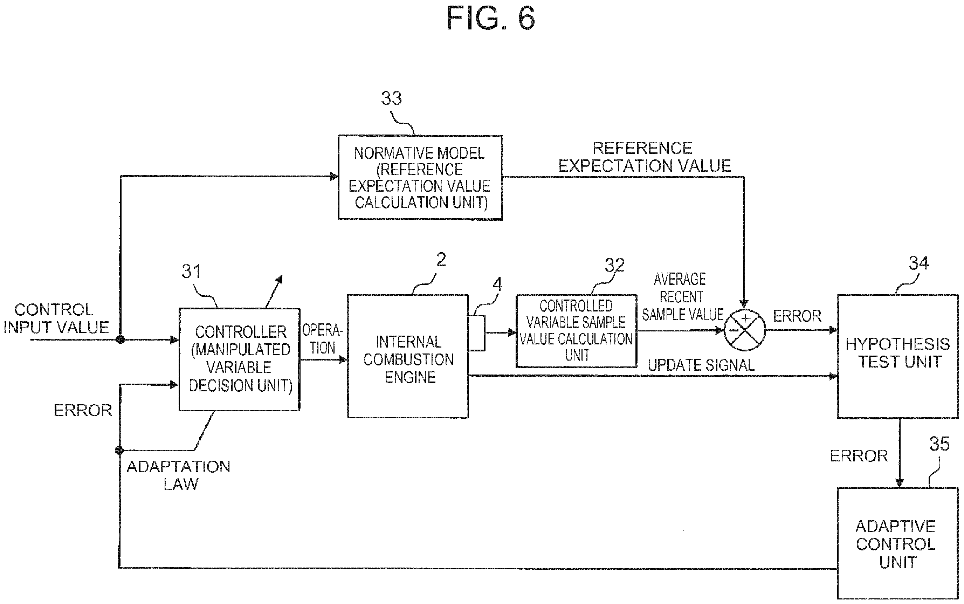

FIG. 6 is a block diagram showing a software configuration of the control system for the internal combustion engine according to the embodiment of the invention. The controlled object of the control system is a physical phenomenon in the internal combustion engine 2, and for the control, a controller 31, a controlled variable sample value calculation unit 32, a normative model 33, a hypothesis test unit 34 and an adaptive control unit 35 are provided. They do not exist as hardware, and are implemented in software when the processor 12 executes the program stored in the memory 14 of the control device 10. The respective blocks shown in FIG. 6 correspond to the above-described processes 21 to 25, and arrows among the blocks indicate flows of information.

The controller 31 executes the above-described manipulated variable decision process 21. The controller 31 receives the control input value from an unillustrated high-order system. The controller 31 decides the manipulated variable from the received control input value. The internal combustion engine 2 is operated in accordance with the manipulated variable decided in the manipulated variable decision process 21. For example, in the case where the controlled object is the combustion and the controlled variable is CA50, the internal combustion engine 2 is operated in accordance with the ignition timing decided by the controller 31.

The controlled variable sample value calculation unit 32 executes the above-described sample value calculation process 22. The controlled variable sample value calculation unit 32 acquires the sensor information output by the sensors 4, and calculates the sample value of the controlled variable from the acquired sensor information, for each sampling cycle. For example, in the case where the controlled variable is CA50, the controlled variable sample value calculation unit 32 acquires the combustion pressure in one combustion cycle from the combustion pressure sensor, and calculates the sample value of CA50 based on the acquired combustion pressure. Furthermore, the controlled variable sample value calculation unit 32 calculates the average value of a predetermined number $n_r$ of recent sample values of the controlled variable, that is, calculates the average recent sample value $X_{ave}$. The predetermined number $n_r$ of recent sample values of the controlled variable includes the currently calculated sample value of the controlled variable.

The normative model 33 executes the above-described reference expectation value calculation process 23. The normative model 33 receives the control input value from the unillustrated high-order system. The normative model 33 calculates the reference expectation value $\mu_o$ of the controlled variable from the received control input value, based on a modeled ideal input-output characteristic. Further, the normative model 33 calculates the standard deviation $\sigma_o$ of the reference normal population used for the learning by the normative model 33, and further calculates the standard error $\sigma_o / n_r^{1/2}$ of the reference normal population when the number of data is $n_r$.

The hypothesis test unit 34 executes the above-described hypothesis test process 24. The hypothesis test unit 34 receives the error $X_{ave} - \mu_o$ between the average recent sample value $X_{ave}$ calculated by the controlled variable sample value calculation unit 32 and the reference expectation value $\mu_o$ output from the normative model 33. Although not illustrated, the hypothesis test unit 34 receives also the standard error $\sigma_o / n_r^{1/2}$ of the reference normal population that is calculated by the normative model 33. The hypothesis test unit 34 sets the region of the acceptance and the region of the reject, using the standard error $\sigma_o / n_r^{1/2}$, and determines whether the error $X_{ave} - \mu_o$ of the controlled variable is in the region of the acceptance or in the region of the reject. Further, as an update signal, the hypothesis test unit 34 receives a crank angle signal that is transmitted from the crank angle sensor in synchronization with the combustion cycle. In response to the update signal, the hypothesis test unit 34 updates the hypothesis test result.

The adaptive control unit 35 executes the above-described adaptive control process 25. In the case where the hypothesis test unit 34 determines that the error $X_{ave} - \mu_o$ of the controlled variable is in the region of the reject, the adaptive control unit 35 receives the error $X_{ave} - \mu_o$ of the controlled variable, from the hypothesis test unit 34. The adaptive control unit 35 applies an adaptation law of the adaptive control to the conversion rule of the controller 31, and modifies the conversion rule based on the received error $X_{ave} - \mu_o$ of the controlled variable.

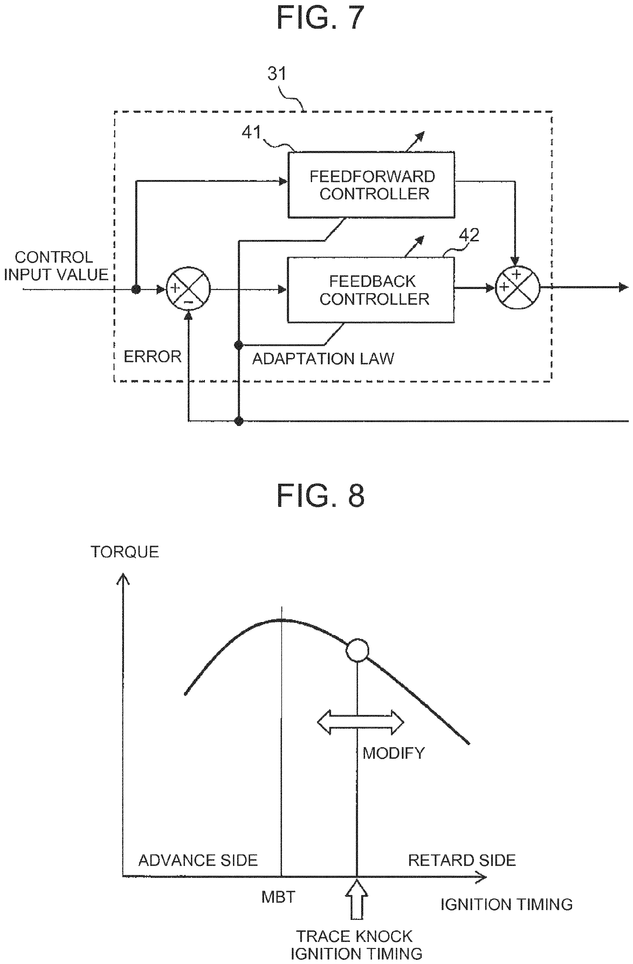

FIG. 7 is a block diagram showing a detailed software configuration of the controller 31. As an example, the controller 31 is constituted by a feedforward controller 41 and a feedback controller 42. The feedforward controller 41 receives the control input value. The feedforward controller 41 converts the control input value into a corresponding map value, using the feedforward map, and outputs the map value as the feedforward value of the manipulated variable. The adaptation law of the adaptive control is applied to the map value.

The feedback controller 42 receives the control input value and the error $X_{ave} - \mu_o$ of the controlled variable. In FIG. 7, the control input value has the same dimension as the dimension of the controlled variable, and the feedback controller 42 receives a corrected input value resulting from correcting the control input value with the error $X_{ave} - \mu_o$. The feedback controller 42 converts the corrected input value into the feedback value of the controlled variable, using the conversion function. The adaptation law of the adaptive control is applied to the feedback gain of the conversion function.

Next, a case where the adaptive control is applied to an ignition timing control will be described as a specific example of the adaptation law of the adaptive control. First, FIG. 8 is a diagram for describing setting of ignition timing and is a diagram showing a relation between ignition timing and torque. As shown in the figure, there are an MBT and a trace knock ignition timing as characteristic ignition timings. The MBT is an ignition timing at which the torque is maximized, and the trace knock ignition timing is an ignition timing that is advanced to a maximum extent in a range in which knocking does not occur. In FIG. 8, the trace knock ignition timing is on the retard side of the MBT, but the MBT can be on the retard side of the trace knock ignition timing, depending on the operation condition.

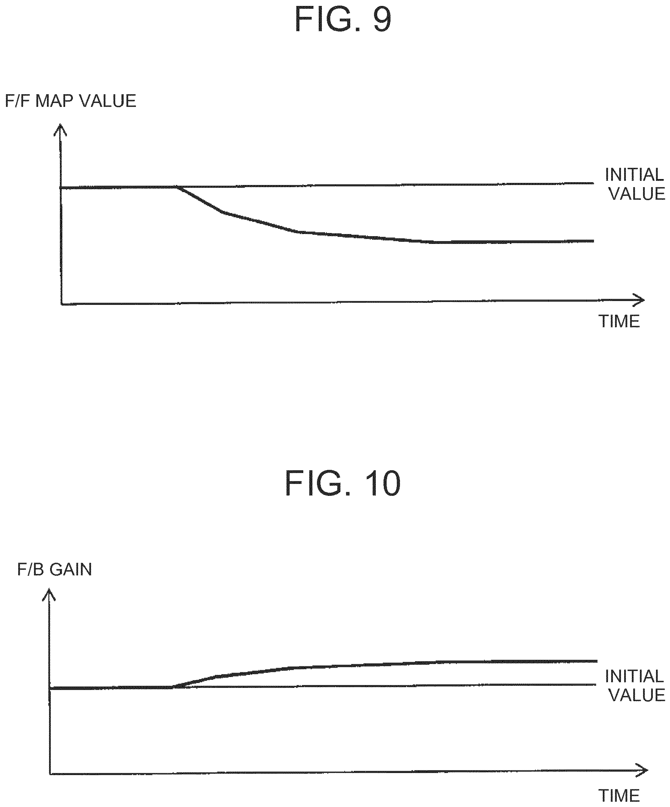

FIG. 9 is a diagram for describing an example in which the ignition timing control of the adaptive control is applied to the feedforward control. In the feedforward map to be used in the feedforward control, a more retarded one of the MBT and the trace knock ignition timing is stored as the map value (F/F map value). In the adaptive control, the map value is modified, for example, depending on the magnitude of the error $X_{ave} - \mu_o$ of CA50 and whether the sign is positive or negative. Specifically, in the case where the sign of the error $X_{ave} - \mu_o$ of CA50 is positive, it is thought that the ignition timing is excessively retarded. Therefore, in this case, the map value is modified such that the ignition timing is corrected to the advance side. On the other hand, in the case where the sign of the error $X_{ave} - \mu_o$ of CA50 is negative, it is thought that the ignition timing is excessively advanced. Therefore, in this case, the map value is modified such that the ignition timing is corrected to the retard side. Further, the map value is modified such that the correction amount of the ignition timing is larger as the magnitude of the error $X_{ave} - \mu_o$ of CA50 is larger. By applying this adaptation law to the map value, as shown in FIG. 9, it is possible to slowly change the map value, corresponding to the change in the state of the controlled object. As a method for modifying the map value, the map value may be always modified by a constant amount, regardless of the magnitude of the error $X_{ave} - \mu_o$ of CA50.

FIG. 10 is a diagram for describing an example in which the ignition timing control of the adaptive control is applied to the feedback control. In the adaptive control, the feedback gain (F/B gain) of the feedback control is modified depending on the magnitude of the error $X_{ave} - \mu_o$ of CA50. That is, the feedback gain is modified such that the correction amount of the ignition timing is larger as the magnitude of the error $X_{ave} - \mu_o$ of CA50 is larger. By applying this adaptation law to the feedback gain, as shown in FIG. 10, it is possible to change the feedback gain such that a desired convergence rate is obtained depending on event occurrence frequency, corresponding to the change in the state of the controlled object. As a method for modifying the feedback gain, the feedback gain may be always modified by a constant amount, regardless of the magnitude of the error $X_{ave} - \mu_o$ of CA50.

In the above-described embodiment, a Z-test is used in the hypothesis test process 24. However, various test techniques such as a t-test and an H-test can be used in the hypothesis test process 24. For example, in the case of using the t-test instead of the Z-test, it is possible to extract samples from the reference normal population, and to perform the hypothesis test using the sample average and the standard deviation calculated from the sample average.

The invention can be also applied to a control device for a compression self-ignition engine. In this case, CA50, LPP or the like can be used as the controlled variable. Further, fuel injection timing, EGR valve opening degree or the like can be used as the manipulated variable.

**Claims**

1. A control device (10) for an internal combustion engine (2), the control device (10) comprising:

   at least one processor (12); and
   a memory (14) configured to store a program,

   the at least one processor being configured to execute a manipulated variable decision process, a sample value calculation process, an expectation value calculation process, a hypothesis test process and an adaptive control process by executing the program,
   the manipulated variable decision process decides a manipulated variable of the internal combustion engine from a control input value related to a controlled variable including a stochastic dispersion, in accordance with a predetermined conversion rule,
   the sample value calculation process calculates a sample value of the controlled variable for each sampling cycle based on information from a sensor that detects a state of the internal combustion engine,
   the expectation value calculation process calculates a reference expectation value of the controlled variable from the control input value using a normative model for the internal combustion engine,
   the hypothesis test process performs a hypothesis test for a null hypothesis that an average value of a predetermined number of recent sample values of sample values of the controlled variable is equal to the reference expectation value, and
   the adaptive control process modifies the predetermined conversion rule by an adaptive control based on an error between the average value and the reference expectation value when the null hypothesis is rejected.

2. The control device (10) according to claim 1, wherein:

   the hypothesis test process includes an acceptance region calculation process and a determination process,
   the acceptance region calculation process calculates an upper limit value of a range of acceptance and a lower limit value of the region of the acceptance by multiplication of a standard error of a reference normal population of the controlled variable when a number of sample data is the predetermined number by a predetermined critical value,
   the determination process rejects the null hypothesis when the error between the average value and the reference expectation value does not fall within the region of the acceptance, and
   the expectation value calculation process is a process of calculating an average value of the reference normal population, as the reference expectation value.

3. The control device (10) according to claim 2, wherein:

the reference normal population is a set of sample values prior to the predetermined number of sample values of the controlled variable; and the reference expectation value and the standard error are updated for each sampling cycle.

4. The control device (10) according to claim 2, wherein:

the reference normal population is a set of sample values of the controlled variable, the sample values being obtained from a reference internal combustion engine; and the reference expectation value and the standard error are predetermined values that are calculated from the reference normal population.

5. The control device (10) according to any one of claims 1 to 4, wherein:

the manipulated variable decision process includes a feedback process of calculating a feedback value of the manipulated variable from the error between the average value and the reference expectation value; and the adaptive control process includes a feedback gain modification process of modifying a feedback gain in the feedback process, depending on the error between the average value and the reference expectation value.

6. The control device (10) according to any one of claims 1 to 5, wherein:

the manipulated variable decision process includes a feedforward process of calculating a feedforward value of the manipulated variable from the control input value; and the adaptive control process includes a feedforward map modification process of modifying a feedforward map in the feedforward process, depending on the error between the average value and the reference expectation value.

7. A control method for an internal combustion engine (2), the internal combustion engine (2) including a memory (14) configured to store a program, and at least one processor (12) configured to execute the program, the control method comprising:

executing, by the at least one processor (12), a manipulated variable decision process of deciding a manipulated variable of the internal combustion engine from a control input value related to a controlled variable including a stochastic dispersion, in accordance with a predetermined conversion rule;

executing, by the at least one processor (12), a sample value calculation process of calculating a sample value of the controlled variable for each sampling cycle based on information from a sensor that detects a state of the internal combustion engine;

executing, by the at least one processor (12), an expectation value calculation process of calculating a reference expectation value of the controlled variable from the control input value using a normative model for the internal combustion engine;

executing, by the at least one processor (12), a hypothesis test process of performing a hypothesis test for a null hypothesis that an average value of a predetermined number of recent sample values of sample values of the controlled variable is equal to the reference expectation value; and

executing, by the at least one processor (12), an adaptive control process of modifying the predetermined conversion rule by an adaptive control based on an error between the average value and the reference expectation value when the null hypothesis is rejected.

# FIG. 1

10

CONTROL DEVICE

12    PROCESSOR

14    MEMORY (PROGRAM)

2

INTERNAL COMBUSTION ENGINE

4

SENSOR

# FIG. 2

10

CONTROL DEVICE

21    MANIPULATED VARIABLE DECISION PROCESS

22    SAMPLE VALUE CALCULATION PROCESS

23    REFERENCE EXPECTATION VALUE CALCULATION PROCESS

24    HYPOTHESIS TEST PROCESS

25    ADAPTIVE CONTROL PROCESS

# FIG. 3

SAMPLE
VALUE    CALCULATION RANGE FOR $\mu_0$    CALCULATION
RANGE FOR Xave

1    $N - n_r$    N    NUMBER OF
SAMPLE
DATA

# FIG. 4

$Xave - \mu_0$

$Z_{\alpha/2}\sigma_0$

$Z_{\alpha/2}\sigma_0/\sqrt{2}$

$Z_{\alpha/2}\sigma_0/\sqrt{3}$

$\dfrac{Z_{\alpha/2}\sigma_0}{\sqrt{n_r}}$

REGION OF REJECT

REGION OF ACCEPTANCE

0    $n_r$

$-Z_{\alpha/2}\sigma_0/\sqrt{3}$

REGION OF REJECT

$-Z_{\alpha/2}\sigma_0/\sqrt{2}$

$-\dfrac{Z_{\alpha/2}\sigma_0}{\sqrt{n_r}}$

$-Z_{\alpha/2}\sigma_0$

# FIG. 5

```
                    ┌──────────────┐
                    │    START     │
                    └──────┬───────┘
                           │          S101
                           ▼
            ┌──────────────────────────────┐
            │    EXECUTE HYPOTHESIS TEST    │
            └──────────────┬───────────────┘
                           │              S102
                           ▼
                       ╱───────────╲
          NO          ╱  OUTSIDE OF  ╲
    ◄────────────────  REGION OF      ──
    │                 ╲ ACCEPTANCE?  ╱
    │                  ╲────────────╱
    │                       │  YES
    │                       │          S103
    │                       ▼
    │       ┌──────────────────────────────┐
    │       │   EXECUTE ADAPTIVE CONTROL    │
    │       └──────────────┬───────────────┘
    │                      │
    │                      ▼
    │               ┌──────────────┐
    └──────────────►│     END      │
                    └──────────────┘
```

# FIG. 6

# FIG. 7

31

41

FEEDFORWARD
CONTROLLER

42

FEEDBACK
CONTROLLER

CONTROL
INPUT VALUE

+
−

+
+

ERROR

ADAPTATION LAW

# FIG. 8

TORQUE

MODIFY

ADVANCE SIDE

RETARD SIDE

MBT

IGNITION TIMING

TRACE KNOCK
IGNITION TIMING

# FIG. 9

F/F MAP VALUE

INITIAL
VALUE

TIME

# FIG. 10

F/B GAIN

INITIAL
VALUE

TIME

Europäisches
Patentamt

European
Patent Office

Office européen
des brevets

# EUROPEAN SEARCH REPORT

Application Number

EP 19 18 5281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GAO JINWU ET AL: "A statistical combustion phase control approach of SI engines", MECHANICAL SYSTEMS AND SIGNAL PROCESSING, vol. 85, 20 August 2016 (2016-08-20), pages 218-235, XP029793664, ISSN: 0888-3270, DOI: 10.1016/J.YMSSP.2016.08.007 * pages 219-229 * | 1-4,7 | INV.<br>F02D41/14<br><br>ADD.<br>F02P5/153<br>F02D35/02<br>F02D41/28<br>G05B13/04 |
| A | EP 0 719 932 A2 (HONDA MOTOR CO LTD [JP]) 3 July 1996 (1996-07-03) * page 5, line 31 - page 8, line 45; figures 7,9 * | 1-7 | |
| A | EP 3 062 176 A2 (VOLKSWAGEN AG [DE]) 31 August 2016 (2016-08-31) * claims 1-3; figures 2, 3 * | 1-7 | |
| A | WO 2016/204672 A1 (SCANIA CV AB [SE]) 22 December 2016 (2016-12-22) * page 20, line 21 - page 22, line 18; figure 2 * | 1-7 | TECHNICAL FIELDS SEARCHED (IPC)<br><br>F02D<br>F02P |
| A | EP 0 365 946 A1 (MITSUBISHI MOTORS CORP [JP]) 2 May 1990 (1990-05-02) * page 24, line 27 - page 25, line 14; figures 71(A), 71(B) * | 1-7 | G05B |

The present search report has been drawn up for all claims

| Place of search | Date of completion of the search | Examiner |
|---|---|---|
| The Hague | 17 January 2020 | Deseau, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 5281

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2020

| Patent document cited in search report | | Publication date | Patent family member(s) | | Publication date |
|---|---|---|---|---|---|
| EP 0719932 | A2 | 03-07-1996 | DE | 69627399 D1 | 22-05-2003 |
| | | | DE | 69627399 T2 | 23-10-2003 |
| | | | EP | 0719932 A2 | 03-07-1996 |
| | | | US | 5666934 A | 16-09-1997 |
| EP 3062176 | A2 | 31-08-2016 | DE | 102015203210 A1 | 25-08-2016 |
| | | | EP | 3062176 A2 | 31-08-2016 |
| WO 2016204672 | A1 | 22-12-2016 | BR | 112017025164 A2 | 07-08-2018 |
| | | | EP | 3308127 A1 | 18-04-2018 |
| | | | KR | 20180016491 A | 14-02-2018 |
| | | | SE | 1550812 A1 | 16-12-2016 |
| | | | US | 2018171918 A1 | 21-06-2018 |
| | | | WO | 2016204672 A1 | 22-12-2016 |
| EP 0365946 | A1 | 02-05-1990 | DE | 68918216 D1 | 20-10-1994 |
| | | | DE | 68918216 T2 | 02-02-1995 |
| | | | EP | 0365946 A1 | 02-05-1990 |
| | | | KR | 970000448 B1 | 11-01-1997 |
| | | | US | 4976241 A | 11-12-1990 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007198313 A
- JP 2002322938 A

- JP 2011089470 A

**Non-patent literature cited in the description**

- *Mechanical Systems and Signal Processing,* 2017, vol. 85, 218-235

- **JINWU GAO ; YUHU WU ; TIELONG SHEN.** A statistical combustion phase control approach of SI engines. *Mechanical Systems and Signal Processing,* 2017, vol. 85, 218-235